Europäisches Patentamt

European Patent Office

Office européen des brevets

(11) Veröffentlichungsnummer: **0 269 562 B1**

# EUROPÄISCHE PATENTSCHRIFT

(45) Veröffentlichungstag der Patentschrift: **02.09.92**

(51) Int. Cl.⁵: **G05B 19/12**

(21) Anmeldenummer: **87810573.3**

(22) Anmeldetag: **06.10.87**

(54) **Einrichtung zur automatischen werkzeugspezifischen Betriebsdateneinstellung eines elektrischen Antriebsgeräts für auswechselbare Werkzeuge.**

(30) Priorität: **31.10.86 DE 3637128**

(43) Veröffentlichungstag der Anmeldung:
**01.06.88 Patentblatt 88/22**

(45) Bekanntmachung des Hinweises auf die
Patenterteilung:
**02.09.92 Patentblatt 92/36**

(84) Benannte Vertragsstaaten:
**AT CH DE ES FR GB IT LI NL SE**

(56) Entgegenhaltungen:
DE-A- 1 652 694      DE-A- 2 106 023
GB-A- 403 625       GB-A- 1 158 439
GB-A- 2 124 967     US-A- 3 624 478
US-A- 4 206 646     US-A- 4 284 977

PATENT ABSTRACTS OF JAPAN, Band 8, Nr.
152 (M-309)[1589], 14. Juli 1984; & JP-A-59 47
134 (TOSHIBA KIKAI K.K.) 16-03-1984

(73) Patentinhaber: **HILTI Aktiengesellschaft**

**FL-9494 Schaan(LI)**

(72) Erfinder: **Millauer, Wolfgang
Dietrich, Stein-Strasse 5
W-8000 München 60(DE)**

(74) Vertreter: **Wildi, Roland
Hilti Aktiengesellschaft Patentabteilung
FL-9494 Schaan(LI)**

IDEM

PATENT ABSTRACTS OF JAPAN, Band 7, Nr. 203 (M-241)[1348], 8. September 1983; & JP-A-58 102 650 (TOYOTA JIDOSHA KOGYO K.K.) 18-06-1983

IDEM

PATENT ABSTRACTS OF JAPAN, Band 11, Nr. 48 (M-561)[2495], 13. Februar 1987; & JP-A-61 209 858 (MITSUBISHI HEAVY IND. LTD) 18-09-1986

IDEM

SOVIET INVENTIONS ILLUSTRATED, Woche C45, Klasse T06, 17. Dezember 1980, Nr. K8054C/45, Derwent Publications Ltd, London, GB; SU-A-722 730 (KISELEV) 25-03-1980

IDEM

PATENT ABSTRACTS OF JAPAN, Band 7, Nr. 241 (P-232)[1386], 26. Oktober 1983; & JP-A-58 129 320 (NIPPON DENKI K.K.) 02-08-1983

IDEM

**Beschreibung**

Die Erfindung betrifft eine Einrichtung zur automatischen werkzeugspezifischen Betriebsdateneinstellung eines elektrischen Antriebsgeräts für auswechselbare Werkzeuge gemäß dem Oberbegriff des Patentanspruchs 1.

Bei Handhabung von elektrischen Antriebsgeräten für Werkzeuge wie Bohrer, Hammerbohrer, Bohrmeißel, Mauerwerksbohrer und dergleichen wird es dem Benutzer selbst überlassen, die Drehzahl, Schnittgeschwindigkeit, Schlagfrequenz usw. am Antriebsgerät einzustellen. Dies kann ersichtlicherweise zu Problemen führen, und zwar nicht nur dann, wenn beim Einsetzen beispielsweise eines Stahlbohrers vergessen wurde, von Hammerbohrbetrieb oder Meißelbetrieb auf reinen Schnittbetrieb umzustellen. Von heutigen Antriebsgeräten für die erwähnten Werkzeuge wird ein weiter Bereich vom kombinatorischen Anwendungsmöglichkeiten verlangt. Dies führt andererseits unvermeidlicherweise zu Schwierigkeiten, wenn der Benutzer das Antriebsgerät entweder auf eine unzutreffende Betriebsart einstellt und/oder bei zwar richtiger Betriebsarteinstellung unsachgemäß handhabt, beispielsweise mit zu hoher Drehzahl oder zu hoher Schlagfrequenz "fährt".

Für Fräsmaschinen ist es aus der Druckschrift JP-A-61-209858 bekannt, die in eine Werkzeugaufnahme einzusetzenden Fräser entlang eines Umfangbereichs mit einem Bar-Code zu versehen, der durch einen optischen Lesekopf abgetastet wird, um bestimmte auf den Fräser abgestimmte Betriebsparameter der Fräsmaschine voreinzustellen derart, daß eine Beschädigung des Fräsers verhindert wird. Handelt es sich jedoch um Werkzeuge der oben genannten Art wie Bohrer und dergleichen, so ist die Verwendung eines beispielsweise am Aufnahmeschaft vorzusehenden Bar- oder Strichcodes einmal produktionstechnisch bei der Herstellung des Werkzeugs ungünstig, weil der Code in einem separaten Herstellungsschritt angebracht werden muß. Zum anderen sind optisch zu lesende Codes für einen rauhen Praxisbetrieb nicht sicher genug, in dem beispielsweise Bohrmeißel, Hammerbohrer und dergl. häufig verwendet werden. Dies deshalb, weil sich Strichcodes einerseits abnützen, zum anderen, weil Staub und Ölrückstände die feinen Hell-Abschnitte zwischen den Dunkelpartien des Strichcodes verdrecken und verschmieren. Zwar ist es aus der Druckschrift GB-A-2 124 967 bekannt, Formen, die einer bestimmten Formmaschine zuzuordnen sind, entlang einer Außenfläche mit einem Lesefeld aus einer Folge von Materialvertiefungen und -erhöhungen zu versehen und dieses Lesefeld durch einen manuell geführten Abtastkopf abzufragen. Diese Abfrage erfolgt jedoch nicht zur Einstellung von Betriebsparametern, sondern zur Identifizierung der betreffenden Form in Zuordnung auf eine bestimmte Formmaschine.

Der Erfindung liegt damit die Aufgabe zugrunde, Antriebsgeräte der genannten Art je nach dem jeweils verwendeten Werkzeug automatisch auf die werkzeugspezifischen Betriebsdaten einzustellen, so daß abgesehen von beispielsweise einer Grundeinstellung, wie Bohrbetrieb und Schlagbohrbetrieb, außerdem auch gewisse Höchst- oder Mindestgrenzen anderer Betriebsparameter wie Drehzahl, Schnittgeschwindigkeit und Schlagfrequenz, vorgegeben werden oder eine Festeinstellung auf fixe Betriebsdaten erfolgt.

Eine Einrichtung zur automatischen werkzeugspezifischen Betriebsdateneinstellung des elektrischen Antriebsgeräts für Werkzeuge weist erfindungsgemäss die im Kennzeichen des Patentanspruchs 1 angegebenen Merkmale auf.

Vorteilhafte Ausführungsformen und Ergänzungen des Erfindungsgedankens sind in Unteransprüchen gekennzeichnet und/oder in der nachfolgenden Beschreibung erläutert.

Der Erfindungsgedanke geht dahin, Betriebsdaten, wie Drehzahl, Schnittgeschwindigkeit, Schlagfrequenz eines Elektrowerkzeug, zB eines Bohrhammers, vom Werkzeug (zB Hartmetallbohrer) unmittelbar auf das Antriebsgerät zu übertragen, um dort zur automatischen Einstellung des Geräts auf die jeweiligen werkzeugbedingten Erfordernisse verwendet zu werden. Dabei wird davon ausgegangen, dass die massgeblichen Betriebsdaten werkzeugspezifisch und durch Betriebsparameter des Antriebsgeräts (Motordrehzahl, etc.) einzustellen sind.

Sind diese Systemvoraussetzungen gegeben, so folgt daraus die Notwendigkeit für eine automatische Einstellung des Antriebsgeräts auf durch auswechselbare Werkzeuge bedingt wechselnde Betriebsdaten, diese Daten dem Werkzeug in geeigneter Weise einzuprägen (zu markieren), diese Daten über die geometrische Schnittstelle Werkzeug/Antriebsgerät in einer geeigneten Betriebsphase zu übertragen und im Gerät so auszuwerten bzw. umzusetzen, dass daraus selbsttätig Sollwerte bzw. Einstellbefehle gebildet werden. Erfindungsgemäss ist die geometrische Schnittstelle Werkzeug/ Antriebsgerät werkzeugseitig der Einsteckschaft und geräteseitig die sogenannte Werkzeugaufnahme.

Die Datenmarkierungen werden auf dem Werkzeug am Einsteckschaft vorzugsweise im Bereich, der zwischen dem "Drehmomentübertragungsbereich" und dem eigentlichen Arbeitsbereich (zB einer Förderwendel) liegt, als eine, zwei oder mehrere parallele Folgen von kerbenartigen Vertiefungen (Löchern), die durch Stege getrennt sind, längs des Umfangs angebracht.

Gemäss einer Ausführungsvariante kann anstelle der Vertiefungen bzw. am Einsteckschaft auch ein Ring, beispielsweise aus Metall, auf diesem in geeigneter Weise, insbesondere mittels einer elastischen Verbindung, angebracht werden, der statt Kerben auch volle Durchbrüche, zB Löcher oder Schlitze, haben kann. Ein solcher Ring kann auch noch Zusatzfunktionen, wie Staubschutz (Schleuderring) erfüllen. Der Ring muss so mit dem Einsteckschaft verbunden sein, dass er sich in jedem Fall mit dem Werkzeug mitdreht. Bezüglich anderer Bewegungsrichtungen können in beschränktem Umfang Relativbewegungen zwischen Einsteckschaft und Ring zugelassen werden.

Die um den Umfang des Einsteckschaftes verteilt angeordnete Folge von Vertiefungen und Stegen wird erkannt von Sensoren, die bei einer bevorzugten Ausführungsform der Erfindung nach Art induktiver Näherungsschalter arbeiten und so in der Werkzeugaufnahme des Antriebsgeräts eingebaut sind, dass jeweils eine einseitig offene Topfkernspule des zu diesem Näherungsschalterprinzip gehörenden Hochfrequenzschwingkreises ihr Streufeld auf jeweils eine dieser Folgen - auch Datenspur genannt - gerichtet hat. Bei einem rotierenden Werkzeug, zB einem Bohrer, werden durch die Drehung des Werkzeugs die Datenspur(en) unter der (den) Spule(n) vorbeibewegt, wobei eine jeweilige Vertiefung bzw. ein Loch eine geringere Bedämpfung des Streufelds hervorruft als ein zwischen zwei Vertiefungen (Löchern) stehender Steg. Diesen unterschiedlichen Bedämpfungen werden unterschiedliche Signalzustände zugeordnet, die am Ausgang des Sensors in Form von elektrischen Wechselsignalen zur Verfügung stehen.

Auch andere als nach dem Prinzip induktiver Näherungsschalter arbeitende Sensorprinzipien kommen in Frage, soweit sie geeignet sind, die Loch-/Steg-Folge auf dem Einsteckschaft zu erkennen, so zB magnetische Sensoren, die die unterschiedliche magnetische Leitfähigkeit von Loch und Steg zu erkennen vermögen oder optische Sensoren, für die Loch und Steg jeweils unterschiedliche Abdeckungsgrade eines Strahlengangs bedeuten.

Für alle Sensorprinzipien gilt, dass das Werkzeug sich unter den Sensoren hinweg dreht und der Sensor einen Signalwechsel liefert, der dem Abbild eines Wechsels von Loch und Steg entspricht.

Das Datenauswerteverfahren, also die Decodierung, im Antriebsgerät ist von der Art der gewählten Codierung und diese wiederum von der Zahl der zur Verfügung stehenden Datenspuren abhängig. Wegen der grossen Unterschiede zwischen ein- und mehrspurigen Codierungen werden diese nachfolgend getrennt behandelt.

Bei einer einspurigen Codierung ist es, wie aus der Datenübertragungstheorie bekannt, zunächst nicht möglich, aus einem reinen Wechsel von Signalen ohne Zusatzinformation (zB. Zeit oder Frequenz) eine eindeutige Information zu decodieren. Es ist daher erforderlich, beim Decodieren eines einspurigen Codes hilfsweise eine Information über die Umdrehung des Werkzeugs zu verwenden. Als besonders vorteilhaft, einfach und wirtschaftlich hat es sich erwiesen, hierfür die Impulse eines Drehzahl-Istwertgebers des Antriebsmotors zu verwenden. Ein solcher Drehzahl-Istwertgeber ist für andere Steuer- und Regelungszwecke in vielen Antriebsgeräten der hier in Rede stehenden Art ohnehin vorhanden. Ueblicherweise verwendet man hierfür ein auf die Motorwelle, gegebenenfalls auch auf eine Getriebewelle, aufgesetztes Magnetpolrad mit 2p Polen, die an einer als Sensor dienenden Induktionsspule oder einem ähnlichen Element, zB einem Hall-Generator, eine Wechselspannung erzeugen, bei der jedes der p-Polpaare einer Periode bzw. jede Halbwelle einem Pol entspricht. In anderen Worten, jede Halbwelle dieses Drehzahlgebersignals entspricht einem Umdrehungsinkrement von $\frac{1}{2p}$ Umdrehungen, bezogen auf die Motorwelle, oder von $\frac{1}{2p} \times \frac{1}{\ddot{u}}$ Umdrehungen, bezogen auf den Einsteckschaft, wenn ü die Untersetzung vom Motor zur Werkzeugspindel ist.

Ein Zahlenbeispiel verdeutlicht, dass bei einem 16-poligen Magnetpolrad und einem Uebersetzungsverhältnis zwischen Motor und Werkzeugspindel von 40 über das Drehzahlgebersignal eine inkrementale Auflösung einer Werkzeugumdrehung in 640 Schritte erreicht wird, dh.

ein Drehzahlgeberimpuls = ein Schritt =

$$\frac{1}{2p \cdot \ddot{u}} = \frac{1}{16 \cdot 40} = \frac{1}{640} \text{ (Umdrehung)}$$

Die Signalauswertung kann dann ähnlich dem in der Technik bekannten Verfahren der Pulsbreitencodierung erfolgen, indem festgestellt wird, über welchem Teil der Umdrehung unter dem dem Einsteckschaft zugeordneten Sensor eine Vertiefung und über welchem Teil der Umdrehung keine Vertiefung, also ein Steg, am Einsteckschaft festzustellen ist. Durch unmittelbaren Vergleich der Anzahl jeweiliger Drehwinkelinkremente oder nach geeigneter mathematischer Verarbeitung (Quotienten- oder Differenzbildung) kann ein Informationsinhalt eindeutig interpretiert werden. Dies geschieht bei einer vorteilhaften Ausführungsform der Erfindung in der Praxis so, dass beispielsweise ein Mikroprozessor die vom Magnetpolradsensor gelieferten Drehzahlgeberimpulse immer dann in ein erstes Register einzählt, wenn der Sensor im Einsteckschaft eine Vertiefung meldet und in ein zweites Register einzählt, wenn keine Vertiefung, also ein Steg, vorhanden ist. Durch unmittelbaren Vergleich oder auch aus einer geeigneten Verknüpfung der beiden Registerinhalte, zB Division oder Differenzbildung, entsteht für jedes Verhältnis oder jeden Differenzwert von Loch- zu Stegbreite auf dem Einsteckschaft ein fest zugeordnetes Ergebnis im Rechner, welches auf bekannte Weise durch Vergleich mit gespeicherten Tabellen eindeutig interpretierbar ist.

Ist die Maschine mit einem Schaltgetriebe ausgerüstet, so ist zusätzlich noch eine Information über die jeweilige Getriebestellung erforderlich. Diese wird aus einer Abfrage abgeleitet, sofern sie sich nicht aus der Logik der Steuerung ergibt, zB Lesen nur in einer bestimmten, von der Steuerung vorgegebenen Getriebestellung bei automatisch geschalteten Maschinen.

Der besondere Vorteil dieser Art der Signalauswertung bei Verwendung nur einer Datenspur besteht darin, dass das Verfahren im Prinzip drehzahlunabhängig ist, da als Bezugsgrösse Drehwinkelinkremente verwendet werden.

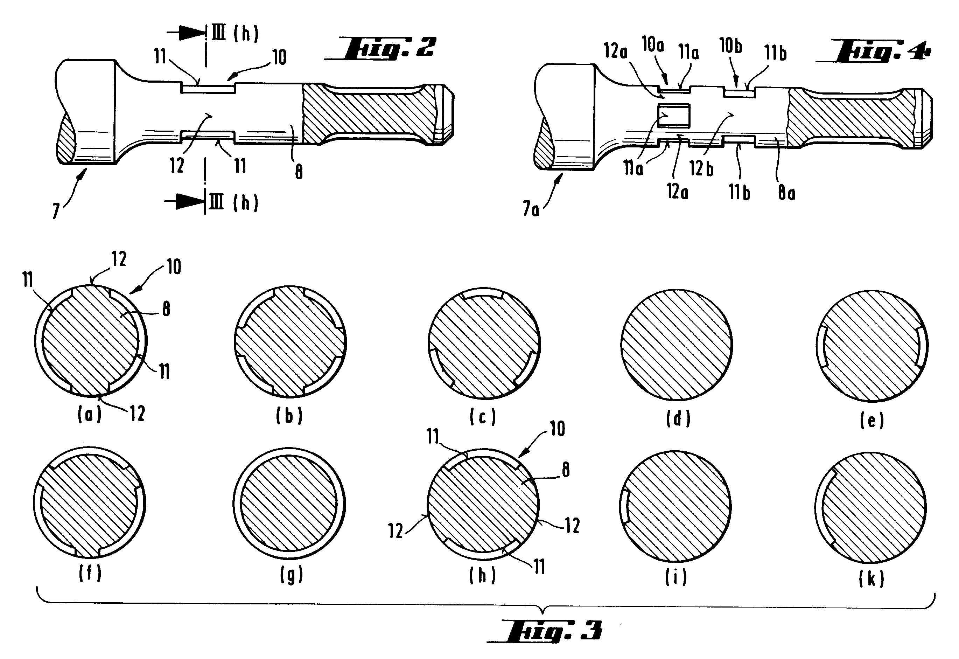

Werden nun zusätzlich auch die Lesezeit oder was noch einfacher ist, die Zähler auf gewisse Extremwerte (Ueberlauf/Null) überwacht, so können auch Extremwerte einer möglichen Codierung, etwa "keine Vertiefung vorhanden" oder "Vertiefung über dem vollen Umfang" (Einstich am Einsteckschaft) entsprechend den Divisionsergebnissen "0" oder "$\infty$" praktisch ausgewertet werden. Anhand der Fig. 2 werden später noch Einzelheiten des Auswerteverfahrens erläutert.

Die einspurige Codierung hat den Vorteil grosser Robustheit und lässt sich auch bei der Herstellung der Werkzeuge vergleichsweise leicht ohne allzu grosse Toleranzanforderungen realisieren. Die Zahl der möglichen, eindeutig unterscheidbaren Codierungen ist in der Praxis aber nicht nur durch die Anzahl der auf dem Umfang des Einsteckschafts anzubringenden möglichen Vertiefungen und Stege begrenzt, sondern vor allem auch durch die Leseschärfe, mit der der Sensor die Uebergänge von Vertiefungen zum vollen Material der Stege zu erkennen vermag. Abhängig von diesem muss ein Unschärfebereich für die auscodierten Ergebnisse in Toleranzgruppen eingeordnet zugelassen werden.

Bei zwei- oder mehrspurigen Codierungen, bei denen jeder Spur ein eigener Sensor zugeordnet ist, steigt natürlich die Zahl der möglichen zu übertragenden Informationsinhalte.

Mit einem einspurigen Verfahren wird selbstverständlich am wenigsten Platz auf dem Einsteckschaft und nur ein Sensor in der Werkzeugaufnahme benötigt. Auf einem Einsteckschaft von 10 mm Durchmesser lassen sich je nach Sicherheitsanforderung bei der Decodierung und eindeutigen Informationserkennung fünf bis sieben verschiedene Codierungsmöglichkeiten verwirklichen. Das zwei- oder mehrspurige Verfahren benötigt mehr Platz auf dem Einsteckschaft, zwei oder mehr Sensoren, jedoch kann mit einer logischen Schaltung ohne Verarbeitungseinheit beispielsweise in einem Mikroprozessor, decodiert werden. Auf einem 10 mm Schaftdurchmesser lassen sich 32 bis 64 Informationseinheiten realisieren.

Eine andere Art der Decodierung ergibt sich, wenn eine der Spuren auf dem Werkzeug selbst als Inkrementalgeber dient und dementsprechend auf Drehzahlimpulse, abgeleitet aus einem Drehzahlgeber, verzichtet wird. In diesem Fall wird also eine der Spuren als Taktgeberspur verwendet, während die andere(n) Spur(en) als Informationsspur(en) dienen. In diesem Fall wird nicht mehr die Information aus dem Breitenverhältnis der Informationssignale gewonnen, sondern der Geometrie der Datenspur werden logische Zustände (0/L) zugeordnet, die in einem jeweils vom Signalwechsel in der Taktspur gesteuerten Rhythmus abgefragt wird (werden).

Durch die Verwendung von nur einer Datenspur in einer Folge von über den Umfang des Einsteckschaftes verteilten Vertiefungen und Stegen und mit der Anwendung eines Sensors in Form eines induktiven Näherungsschalters werden für die Praxis ausser der einfachen Herstellung und der zuverlässigen Signalauswertung auch noch andere Vorteile erreicht, die das zugrundeliegende Prinzip, beispielsweise einer optischen Abtastung, als überlegen erscheinen lassen. Werden beispielsweise die Vertiefungen im Einsteckschaft durch gepressten Staub, Beton, Oelrückstände oder dergleichen zugeschmiert, so kann bei optischer Auslesung eine eindeutige Informationsidentifizierung nicht mehr erreicht werden. Bei einem induktiven Sensor mit offener Topfkernspule gemäss der bevorzugten Ausführungsform der Erfindung dagegen wird selbst dann noch eine befriedigende Informationsauswertung und damit Betriebsdateneinstellung erreicht, wenn die Vertiefungen im Einsteckschaft zugeschmiert sind.

Ein Ausführungsbeispiel der Erfindung wird nachfolgend unter Bezug auf die Zeichnung erläutert. Es zeigen:

Fig. 1     die im Zusammenhang mit der Erfindung wesentlichen Teile und Baugruppen eines Antriebsgeräts für auswechselbare Werkzeuge, das mit einer Einrichtung zur automatischen werkzeugspezifischen Betriebsdateneinstellung ausgerüstet ist;

Fig. 2     den Einsteckschaft eines Werkzeugs, der mit einer Datenspur versehen ist;

Fig. 3     Datenmarkierungsspuren an Einsteckschäften zur Betriebsdateneinstellung für unterschiedliche

EP 0 269 562 B1

Werkzeugtypen gemäss einer Schnittlinie III-III in Fig. 2; und

Fig. 4    den Einsteckschaft eines Werkzeugs, der mit zwei Datenspuren versehen ist.

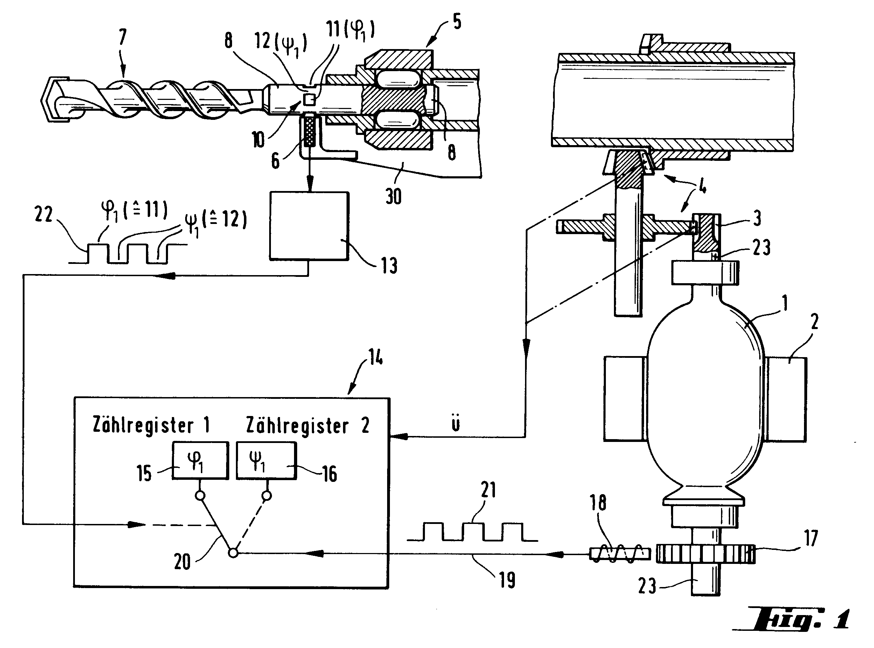

Fig. 1 lässt einen Antriebsmotor mit Rotor 1, Ständer 2 und auf der Motorwelle 23 sitzendem Ritzel 3 erkennen, dessen Rotation über ein nur schematisch angedeutetes Getriebe 4 auf die Werkzeugaufnahme 5 übertragen wird und so eine Antriebskraft auf den Einsteckschaft 8 eines Werkzeugs 7 überträgt. Das Werkzeug 7 weist zwischen dem freiliegenden Arbeitsbereich und dem Drehmomentübertragungsbereich am Einsteckschaft 8 über den Umfang verteilt eine bestimmte Anzahl von Vertiefungen 11 auf, die gegeneinander durch auf vollem Durchmesserumfang stehengelassene Stege 12 getrennt sind (vgl. auch Fig. 2). Die über den Umfang verteilte Folge von Vertiefungen 11 und Stegen 12 bilden gemeinsam eine Datenspur 10. Ein Sensor 6 in Form einer offenen Topfkernspule ist auf die Datenspur 10 ausgerichtet, dh bei Drehung des Werkzeugs 7 wechseln sich die Vertiefungen 11 bzw Stege 12 unter dem Sensor 6 ab, der in das vorderste Ende des allgemein mit Bezugshinweis 30 angegebenen Gehäuses eingebaut ist. Der Sensor 6 bildet Teil eines allgemein mit Bezugshinweis 13 angegebenen induktiven Näherungsschalters. Näherungsschalter mit induktiven Sensoren dieser Art sind für sich bekannt, so dass für den Fachmann eine weitere Erläuterung dieses Sensorprinzips erübrigt werden kann.

Aufgrund der umlaufenden Folge von Vertiefungen 11 und Stegen 12 der Datenspur 10 liefert der induktive Näherungsschalter 13 ein Wechselsignal 22, dessen beispielsweise den Vertiefungen 11 zugeordneter positiver Signalanteil mit $\phi_1$ und dessen den Stegen 12 zugeordneter negativer Signalanteil mit $\psi_1$ bezeichnet ist. Das Wechselsignal 22 gelangt in eine Auswerteeinrichtung, beispielsweise einen Mikroprozessor 14, und dient dort zur Umsteuerung eines (elektronischen) Schalters 20, über den alternierend zwei Register oder Zähler 15, 16 aktiviert bzw auf Zählbetrieb geschaltet werden. Je nach der momentanen Stellung des Schalters 20 werden Drehwinkelinkremente in Form von Impulsen eines Taktsignals entweder in das eine Zählerregister 15 (beispielsweise bei positivem Impuls des Wechselsignals 22 entsprechend $\phi_1$ und den Vertiefungen 11) eingelesen, während das zweite Zählerregister 16 mit Drehwinkelinkrement-Impulsen des Taktsignals 21 beaufschlagt wird, wenn momentan der negative Impuls $\psi_1$ des Wechselsignals 22 anliegt, dh, wenn der induktive Näherungsschalter 13 im Augenblick einen Steg 12 abtastet. Das Taktsignal 21 mit den Drehwinkelinkrement-Impulsen liefert über eine Leitung 19 ein (zweiter) Sensor 18, der auf ein Magnetpolrad 17 ausgerichtet ist, das auf die Motorwelle 23 aufgesetzt ist und mit dieser umläuft. Der Sensor 18 kann sowohl eine Induktionsspule oder auch ein Hall-Generator sein.

Zur eindeutigen Informationserkennung bei der nachfolgend beschriebenen Auswertung der aufgelaufenen Zählerstände in den Zählerregistern 15 bzw 16 wird dem Mirkoprozessor 14 auch noch das eingestellte Getriebeübersetzungverhältnis ü mitgeteilt. Die Zählerstände der Zählerregister 15 bzw. 16 werden direkt oder über eine Umrechnung, zB durch Bildung des Verhältnisses oder der Differenz, Informationen zugeordnet, die durch Vergleich mit einer beispielsweise in einem ROM gespeicherten Wertetabelle erhalten werden. Dabei ist eine redundante Verarbeitung einschliesslich der Berücksichtigung von "Sicherheitszonen" für zulässige Zählwerte zum Ausgleich von Toleranzen und Spiel am Werkzeug 7 relativ zur Werkzeugaufnahme 5 vorgesehen.

Die Signalverarbeitung im Mirkoprozessor 14 erfolgt nach folgendem Programmablaufschema:

- Benutzer betätigt Geräteschalter von AUS nach EIN. Einlesen erfolgt bei jedem Einschalten.
- Start einlesen, Zählerregister 15, 16 rücksetzen, Zähler 15, 16 starten und auf Ueberlauf überwachen.
- Bei Wechsel zB von $\psi_1$ nach $\phi_1$, Zähler rücksetzen und starten, auf Ueberlauf überwachen.
- Bei Wechsel von $\phi_1$ nach $\psi_1$ Zählerstand nach Register in 15 laden, Zähler rücksetzen und Zähler auf Ueberlauf überwachen.
- Bei Wechsel von $\psi_1$ nach $\phi_1$ Zählerstand in Register in 16 laden.
- Registerstände weitergeleitet zur Signalaufbereitung; bei Zählerüberlauf ebenfalls weiter zur "Aufbereitung". Das uncodierte (herkömmliche) Werkzeug wird aus dem "Ueberlaufwert" des "Steg"-Zählers erkannt, die Ringnut aus dem "Ueberlaufwert" des "Nut"-Zählers.
- Zur Signalaufbereitung Zählerregisterstände 15 und 16 werden durch Vergleich mit vorgegebenen (fest abgespeicherten) Klassengrenzen in definierte Klassen $\phi_1$ (n) und $\psi_1$ (n) eingeordnet, wobei die Klassenbreite der Streubreite und der Klassenabstand der Streubreite plus einem Sicherheitsabstand entspricht.
- Mikroprozessor 14 fragt Getriebeabstufung ü ab und wählt entsprechendes Datenfeld (Tabelle) an.
- Die der jeweiligen Kombination $\phi_1$ (n) und $\psi_1$ (n) entsprechenden Betriebsdaten werden aus einer Tabelle entnommen und in Abhängigkeit von der Getriebestufe einer Motordrehzahl $n_{mot}$ zugeordnet.
- Der Einlese- und Aufbereitungsvorgang wird mindestens einmal wiederholt.
- Die Ergebnisse des ersten Durchgangs und des zweiten Durchgangs werden verglichen; bei Gleichheit des Ergebnisses Weitergabe auf "Stellglieder" und bei Ungleichheit "Störung".
- Zu Beginn des Betriebsablaufs "Stellen" wird Drehzahlsollwert $n_{mot}$ an die Motorregelung übergeben.

6

- Getriebestufeneinstellung "Ist" wird mit "Soll" verglichen; gegebenenfalls wird ein Schaltbefehl ausgelöst zur Betätigung eines Stellmagneten für das Getriebe.

Der so weit erläuterte Programmablauf ist nur als Beispiel zu verstehen.

Die Fig. 3 zeigt auswahlweise Beispiele für die Gestaltung der Folge von Vertiefungen 11 und Stegen 12 der Datenspur 10 in Zuordnung auf unterschiedliche Werkzeugtypen. So beziehen sich die ausgewählten Muster von Datenspuren 10 gemäss Fig. 3 beispielsweise auf folgende Werkzeugarten:

- Fig. 3(a) und Fig. 3(h) auf zwei Typen eines Meissels;
- Fig. 3(b) und Fig. 3(c) auf zwei Typen eines Hammerbohrers;
- Fig. 3(d) auf ein "altes" Werkzeug ohne Datenmarkierung;
- Fig. 3(e) auf einen Spezialmeissel;
- Fig. 3(f) auf einen Mauerwerksbohrer;
- Fig. 3(g) auf einen Schalungsbohrer (ohne Einstellung oder Festeinstellung
- Fig. 3(i) auf ein Dübelsetzwerkzeug; und
- Fig. 3(k) beispielsweise auf ein wahlfreies, vom Gerätebenutzer häufig benötigtes und zu bestimmendes Werkzeug.

Die jeweilige Länge und das Verteilungsmuster der Folge von Vertiefungen 11 und Stegen 12 gemäss Fig. 3 ist selbstverständlich nur eine Auswahl von Beispielen. Die Codierungszuordnung kann und wird in der Regel bedarfsspezifisch, dh nach den Bedürfnissen des Benutzers, erfolgen.

Ein Werkzeug 7a, dessen Einsteckschaft 8a zwei zueinander axial beabstandete Datenspuren 10a, 10b trägt, ist der Fig. 4 entnehmbar. Jede Datenspur 10a, 10b setzt sich wiederum aus Vertiefungen 11a, 11b und Stegen 12a, 12b zusammen. Die eine Datenspur 10a dient als Taktgeberspur, die andere Datenspur 10b als Informationsspur. Jeder Datenspur 10a, 10b wird ein geräteseitiger Sensor zum Auslesen der codierten Informationen zugeordnet.

**Patentansprüche**

1.  Einrichtung zur automatischen werkzeugspezifischen Betriebsdateneinstellung eines elektrischen Antriebsgeräts für auswechselbare Werkzeuge mit
    - im Bereich des zur Halterung und Wirkverbindung mit dem Antriebsgerät (1 bis 4) dienenden Einsteckschaftes (8) des Werkzeugs (7) über dessen Umfang verteilt angebrachte, werkzeugspezifische Datenmarkierungen (10);
    - einer in die Werkzeugaufnahme (5) des Antriebsgeräts (1 bis 4) relativ zum Gerätegehäuse feststehend eingebauten und bei in das Antriebsgerät eingesetztem Werkzeug (7) auf die Datenmarkierungen (10) ausgerichteten Markierungslesevorrichtung (6, 13), die bei einer Relativbewegung zwischen Werkzeug (7) und Antriebsgerät (1 bis 4) ein der Folge der Datenmarkierungen (10) auf dem Umfang des Einsteckschaftes (8) entsprechendes elektrisches Signal (22) erzeugt, und mit
    - einer elektronischen Auswerteeinrichtung (14), welche das elektrische Signal (22) aufnimmt und diesem entsprechende Einstellbefehle zur Einstellung der Antriebseinheit des Antriebsgeräts (1 bis 4) auf dem Werkzeug (7) entsprechende Betriebsparameter erzeugt,
    **dadurch gekennzeichnet,** daß
    - die Datenmarkierungen (10) als über den Umfang des Einsteckschaftes (8) verteilte Folge von kerbenartigen Vertiefungen (11) ausgebildet sind, die voneinander durch auf Schaftdurchmesser stehengebliebene Stege (12) getrennt sind, derart, daß eine Folge von zueinander gehörigen Vertiefungen und Stegen wenigstens eine umlaufende Datenspur bilden, und daß
    - die Markierungslesevorrichtung (6, 13) wenigstens einen in die Werkzeugaufnahme (5) eingebauten induktiven Sensor (6) aufweist, der die Folge von Vertiefungen (11) und Stegen (12) erfaßt.

2.  Einrichtung nach Anspruch 1, dadurch gekennzeichnet, dass der Sensor (6) eine zu einem HF-Schwingkreis gehörige, in Ausrichtung auf die zugeordnete Datenspur offene Topfkernspule aufweist.

3.  Einrichtung nach Anspruch 1 oder 2, dadurch gekennzeichnet, dass wenigsten zwei Datenspuren und wenigstens zwei Sensoren vorgesehen sind, wobei eine der Datenspuren als Taktgeberspur (10a) zur eindeutigen Erkennung der auf der oder den anderen Datenspur(en) (10b) auslesbaren Information dient.

4.  Einrichtung nach Anspruch 1, dadurch gekennzeichnet, dass mindestens ein Taktsignal (21) zur eindeutigen Informationsdecodierung von einem Drehzahl-Istwertgeber (17, 18) des Antriebsgeräts (1

7

bis 4) abgeleitet wird.

5. Einrichtung nach Anspruch 4, dadurch gekennzeichnet, dass als Drehzahl-Istwertgeber ein auf eine Motor- oder Getriebewelle (23) aufgesetztes Magnetpolrad (17) mit einer Anzahl von 2p Magnetpolen, p = 1, 2, 3 ... und ganzzahlig, sowie ein gehäusefester zweiter Sensor (18) verwendet wird, der bei Umlauf des Magnetpolrads (17) eine Wechselspannung mit einer der Anzahl der Magnetpolpaare entsprechenden Periode erzeugt.

6. Einrichtung nach Anspruch 5, dadurch gekennzeichnet, dass der zweite Sensor (18) eine Induktionsspule ist.

7. Einrichtung nach Anspruch 5, dadurch gekennzeichnet, dass als zweiter Sensor (18) ein Hall-Generator verwendet wird.

8. Einrichtung nach Anspruch 1, dadurch gekennzeichnet, dass die Markierungslesevorrichtung wenigstens einen optischen Sensor enthält, dessen Strahlengang entsprechend der Umlauffolge von Vertiefungen und Stegen unterschiedlich beeinflusst und daraus das Signal gewonnen wird.

9. Einrichtung nach einem der vorstehenden Ansprüche, dadurch gekennzeichnet, dass die elektronische Auswerteeinrichtung (14) zwei Register oder Zähler (15, 16) enthält, die über einen vom Signal (22) des Sensors (6) umsteuerbaren Schalter (20) in alternierender Folge zur zählenden Aufnahme von Impulsen des Taktsignals (21) aktivierbar sind, und dass die zu festgelegten Abständen erreichten Register- oder Zählerinhalte durch Vergleich mit gespeicherten Tabellenwerten ein Befehlssignal für die Betriebsdateneinstellung des Antriebsgeräts (1 bis 4) liefern.

10. Einrichtung nach einem der vorstehenden Ansprüche 1 bis 9, dadurch gekennzeichnet, dass die elektronische Auswerteeinrichtung (14) zwei Register oder Zähler (15, 16) enthält, die über einen vom Signal (22) des Sensors (6) umsteuerbaren Schalter (20) in alternierender Folge zur zählenden Aufnahme von Impulsen des Taktsignals (21) aktivierbar sind, und dass die zu festgelegten Zeitabständen erreichten Register- oder Zählerinhalte durch einander dividiert oder voneinander subtrahiert werden und aus dem Ergebnis durch Vergleich mit gespeicherten Tabellenwerten ein Befehlssignal für die Betriebsdateneinstellung des Antriebsgeräts (1 bis 4) liefern.

11. Einrichtung nach Anspruch 9 oder 10, dadurch gekennzeichnet, dass bei über ein Schaltgetriebe (4) umschaltbaren Uebersetzungsverhältnissen getriebestellungsabhängig mehrere auswahlweise anwählbare Vergleichstabellen vorgesehen sind.

**Claims**

1. Device for automatic setting of tool-specific operating data of an electric drive unit for exchangeable tools, having
   - in the area of the tool's (7) inserting shaft (8), which serves to hold and operationally connect to the drive unit (1 to 4), peripherally spaced tool-specific data markings (10);
   - a mark-reading device (6, 13), which is fixedly installed relative to the tool housing into the tool chuck (5) of the drive unit (1 to 4) and oriented towards the data markings (10) of a tool (7) inserted into the drive unit, and which produces a respective electrical signal (22), which corresponds with the sequence of data markings (10) on the periphery of the inserting shaft (8), during a relative movement between tool (7) and drive unit (1 to 4), and
   - an electronic evaluating unit (14), which receives the electrical signal (22) and produces therewith corresponding setting instructions for setting the drive of the drive unit (1 to 4) to operating parameters corresponding with the tool (7),
   **characterised in that**
   - the data markings (10) are arranged as a sequence of notch-like grooves (11), which are spaced over the periphery of the inserting shaft (8) and separated from one another by webs (12) maintained on the shaft diameter, so that a sequence of associated grooves and webs forms at least one peripheral data track, and that
   - the mark-reading device (6, 13) comprises at least one inductive sensor (6) built into the tool chuck (5) which detects the sequence of grooves (11) and webs (12).

**2.** Device according to claim 1, **characterised in that** the sensor (6) comprises a steel clad coil, which is associated with an HF oscillating circuit and open with respect to its orientation towards an associated data track.

**3.** Device according to claim 1 or 2, **characterised in that** at least two data tracks and at least two sensors are provided, in which respect one of the data tracks serves as a pulse-generator track (10a) for positive identification of information read from the data track or the other data tracks (10b).

**4.** Device according to claim 1, **characterised in that** at least one pulse signal (21) for positive decoding of information is derived from an indicator of an actual revolution value (17, 18) of the drive unit (1 to 4).

**5.** Device according to claim 4, **characterised in that** the indicator of an actual revolution value is a magneto wheel (17) placed on a motor or gearing shaft (23), having a number of 2p magnet poles, p = 1, 2, 3 ... and integer, and that a second sensor (18) is used, which is attached to the housing and produces an alternating voltage with a period which, when the magneto wheel (17) rotates, corresponds with the number of pairs of magnet poles.

**6.** Device according to claim 5, **characterised in that** the second sensor (18) is an induction coil.

**7.** Device according to claim 5, **characterised in that** the second sensor (18) is a Hall generator.

**8.** Device according to claim 1, **characterised in that** the mark-reading device comprises at least one optical sensor, the beam path of which is differently affected by the rotational sequence of grooves and webs, wherefrom a signal is obtained.

**9.** Device according to one of the above claims, **characterised in that** the electronic evaluating device (14) comprises two registers or counters (15, 16), which are activated via a switch (20), which is controlled by a signal (22) of the sensor (6), in alternating sequence to the counting reception of pulses of the pulse signals (21), and that the register or counter contents, which are obtained at specified periods, deliver an instruction signal for setting the operating data of the drive unit (1 to 4).

**10.** Device according to one of the above claims 1 to 9, **characterised in that** the electronic evaluating device (14) comprises two registers or counters (15, 16) which are activated in alternating succession by means of a switch (20), which is controlled via a signal (22) of the sensor (6), for counted receipt of pulses of the pulse signal (21), and that obtained register and counter contents obatained in specified time gaps are interdivided or subtracted from one another, and that an instruction for setting operational data of the drive unit (1 to 4) is delivered from the result by comparison with stored chart values.

**11.** Device according to claim 9 or 10, **characterised in that,** in the case of a transmission ratio which is switchable by means of a switch gear (4), a plurality of selectible comparative charts are provided in dependence on the gearing position.

**Revendications**

**1.** Installation pour l'introduction automatique de données de commande spécifiques à un outil d'un appareil d'entraînement électrique pour des outils interchangeables, comprenant
- dans la région de la tige d'emmanchement (8) de l'outil (7) servant à la fixation et à la liaison active avec l'appareil d'entraînement (1 à 4), des marquages de données (10) spécifiques à l'outil répartis sur la circonférence de ladite tige d'emmanchement;
- un lecteur de marquages (6, 13) intégré de manière fixe par rapport au carter de l'appareil dans le logement d'outil (5) de l'appareil d'entraînement (1 à 4) et orienté vers les marquages de données (10) lorsque l'outil (7) est monté dans l'appareil d'entraînement, lequel lecteur de marquages génère lors d'un mouvement relatif entre l'outil (7) et l'appareil d'entraînement (1 à 4), un signal électrique (22) correspondant à la succession des marquages de données (10) sur la circonférence de la tige d'emmanchement (8), et
- un dispositif d'interprétation électronique (14) qui reçoit le signal électrique (22) et délivre en fonction de celui-ci des instructions de commande pour régler l'unité d'entraînement de l'appareil d'entraînement (1 à 4) sur des paramètres de fonctionnement correspondant à l'outil (7),

**caractérisée en ce**

- que les marquages de données (10) sont réalisés sous la forme d'une succession de creux (11) en forme d'entailles répartis sur la circonférence de la tige d'emmanchement (8) et séparés par des barrettes (12) subsistant sur le diamètre de la tige, de façon qu'une succession de creux et de barrettes associés forme au moins une piste de données circulaire,
- et que le lecteur de marquages (6, 13) comprend au moins un détecteur inductif (6) intégré dans le logement d'outil (5) qui détecte la succession de creux (11) et de barrettes (12).

**2.** Installation selon la revendication 1, caractérisée en ce que le détecteur (6) comprend une bobine à noyau en pot associée à un circuit oscillant HF et ouverte en direction de la piste de données associée.

**3.** Installation selon l'une des revendications 1 ou 2, caractérisée en ce qu'elle comprend au moins deux pistes de données et au moins deux détecteurs, l'une des pistes de données servant de piste de générateur d'impulsions (10a) pour l'identification univoque du contenu de l'information de l'autre (des autres) piste(s) de données (10b).

**4.** Installation selon la revendication 1, caractérisée en ce qu'au moins un signal de synchronisation (21) pour le décodage univoque de l'information est dérivé d'un capteur de vitesse de rotation effective (17, 18) de l'appareil d'entraînement (1 à 4).

**5.** Installation selon la revendication 4, caractérisée en ce qu'elle utilise comme capteur de vitesse de rotation effective une roue polaire magnétique (17) montée sur l'arbre du moteur ou l'arbre de transmission (23) et comprenant un nombre de 2p pôles magnétiques, p = 1, 2, 3 et nombres entiers, ainsi qu'un second détecteur (18) solidaire du carter qui, lors de la rotation de la roue polaire magnétique (17), génère une tension alternative dont la période correspond au nombre de paires de pôles magnétiques.

**6.** Installation selon la revendication 5, caractérisée en ce que le second détecteur (18) est une bobine de self.

**7.** Installation selon la revendication 5, caractérisée en ce que le second détecteur (18) est un générateur Hall.

**8.** Installation selon la revendication 1, caractérisée en ce que le lecteur de marquages comprend au moins un détecteur optique dont la marche des rayons est modifiée différemment en fonction de la succession circonférentielle des creux et barrettes, avec dérivation du signal.

**9.** Installation selon l'une des revendications précédentes, caractérisée en ce que le dispositif d'interprétation électronique (14) comprend deux registres ou compteurs (15, 16) qui, par l'intermédiaire d'un commutateur (20) réversible par le signal (22) du détecteur (6), peuvent être activés alternativement pour le comptage des impulsions du signal de synchronisation (21), et que les contenus des registres ou compteurs atteints à des intervalles fixes fournissent, par comparaison avec des valeurs de tables stockées, un signal de commande pour l'introduction des données de fonctionnement de l'appareil d'entraînement (1 à 4).

**10.** Installation selon l'une des revendications 1 à 9, caractérisée en ce que le dispositif d'interprétation électronique (14) comprend deux registres ou compteurs (15, 16) qui, par l'intermédiaire d'un commutateur (20) réversible par le signal (22) du détecteur (6), peuvent être activés alternativement pour le comptage des impulsions du signal de synchronisation (21), et que les contenus des registres ou compteurs à des intervalles fixes sont divisés l'un par l'autre ou déduits l'un de l'autre, le résultat fournissant, par comparaison avec des valeurs de tables stockées, un signal de commande pour l'introduction des données de fonctionnement de l'appareil d'entraînement (1 à 4).

**11.** Installation selon l'une des revendications 9 ou 10, caractérisée en ce que, pour des rapports de transmission commutables par l'intermédiaire d'un changement de vitesse (4), plusieurs tables de comparaison peuvent être sélectionnées, au choix, indépendamment de la position du changement de vitesse.

Fig. 1

EP 0 269 562 B1

Fig. 4

Fig. 2

Fig. 3